# EUROPEAN PATENT APPLICATION

(11) **EP 1 533 765 A2**
(43) Date of publication of application: **25.05.2005**
(21) Application number: 04256772.7
(22) Date of filing: 03.11.2004
(51) Int. Cl.: G07F 19/00

(54) **Card reader**

(30) Priority: 19.11.2003 GB 0326954
(71) Applicant: NCR INTERNATIONAL INC., Dayton, Ohio 45479 (US)
(72) Inventor: Swaine, Stephen William, Newtorn of Falkland Coupar Fife KY15 7RZ (GB); McGinn, David Craig, Grange by Errol Perthshire PH2 7SZ (GB); Rohan, Charles George Virgil, Brouhgty Ferry Dundee DD5 2HX (GB); Colley, Andrew, Methven Walk Dundee DD2 3FJ (GB)
(74) Representative: Williamson, Brian

(57) **Abstract**

A self-service terminal incorporates a card reader module housing (100) arranged for attachment to or incorporation in the fascia (16) of the self-service terminal. The housing (100) has a card entry slot (20), a transparent portion (102) and an internal security marking (104) that is visible through the transparent portion (102) of the housing (100).

## Description

The present invention relates to a card reader, and particularly to a housing for a self-service terminal card reader.

Secure access to a self-service terminal, such as an Automated Teller Machine (ATM) is commonly provided by identification card and personal identification number (PIN) combinations. However, this can be compromised if the card details and the PIN are obtained by a third party. One of the most common ways in which this is achieved is by placing a false reader or means of capturing the card over the card slot housing on the ATM fascia.

In one embodiment the card is then read and returned to the user, the information from the card now being accessible to the third part, who can then replicate the card. Alternatively, the card is jammed in the card reader and when the authorized user leaves the ATM to complain the third party retrieves the user's own card.

In either embodiment, the third party will watch the authorized user attempting to enter a PIN number into the ATM. Hence, the third party will now have both the user's PIN and either the user's own card or a copy card containing the same information as the user's own card. The third part can then access the user's account.

It is among the objects of an embodiment of the present invention to obviate or mitigate one or more of the above disadvantages or other disadvantages associated with prior art card readers.

According to a first aspect of the present invention there is provided a card reader module housing arranged for attachment to or incorporation in self-service terminal fascia, the housing having a card entry slot (and a transparent portion, the housing having an internal security marking which is visible through the transparent portion of the housing.

Preferably, the security marking is one of a hologram, a text or legend, a diffuse illumination or a watermark.

Preferably, the means arranged to present the security marking are coupled to a control processor which is in turn coupled to sensors arranged to detect the attachment of a foreign body to the housing.

Most preferably, the control processor is arranged to alter the visible characteristics of the security marking if the sensors detect a possible attachment of a foreign body to or adjacent the housing.

Preferably, the colour of the internal illumination of the housing is altered on the detection of a foreign body.

According to a second aspect of the present invention there is provided a card reader module comprising a housing arranged for attachment to or incorporation in self-service terminal fascia, the housing having a card entry slot and a transparent portion, the module further comprising a security marking, enclosed by the housing, which is visible via the transparent portion of the housing.

According to a third aspect of the present invention there is provided a self-service terminal fascia incorporating a card reader module housing having a card entry slot and a transparent portion, the housing having an internal security marking which is visible through the transparent portion of the housing.

According to a fourth aspect of the present invention there is provided a self-service terminal incorporating a card reader module housing arranged for attachment to or incorporation in the fascia of the self service terminal, the housing having a card entry slot, a transparent portion and an internal security marking which is visible through the transparent portion of the housing.

According to a fifth aspect of the present invention there is provided a method of assisting a user in providing a card for reading by a card reader module, the method including displaying security marking within a housing of the card reader module, so as to reassure the user that the module has not been tampered with by an unauthorised third party.

Preferably, the module is arranged to detect a possible attachment of a foreign body to or adjacent the housing and to alter the visible characteristics of the security marking if such an attachment is detected

Most preferably, the colour of the internal illumination of the housing is altered on the detection of a foreign body.

Embodiments of the present invention will now be described, by way of example, with reference to the accompanying drawings, in which:
Fig. 1 is a simplified schematic front view of a self-service terminal incorporating a card reader in accordance with the present invention;
Fig. 2 is a block diagram showing internal modules in the terminal of Fig. 1; and
Fig 3 is an enlarged view of a card reader housing in accordance with the present invention.

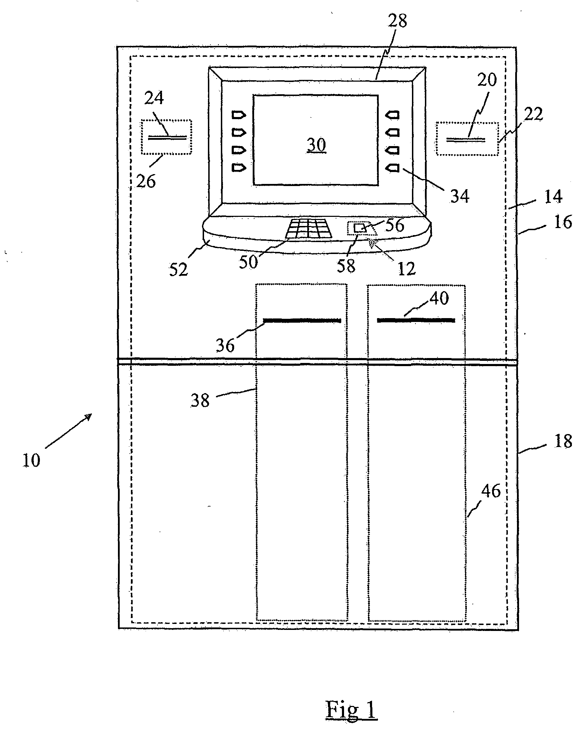

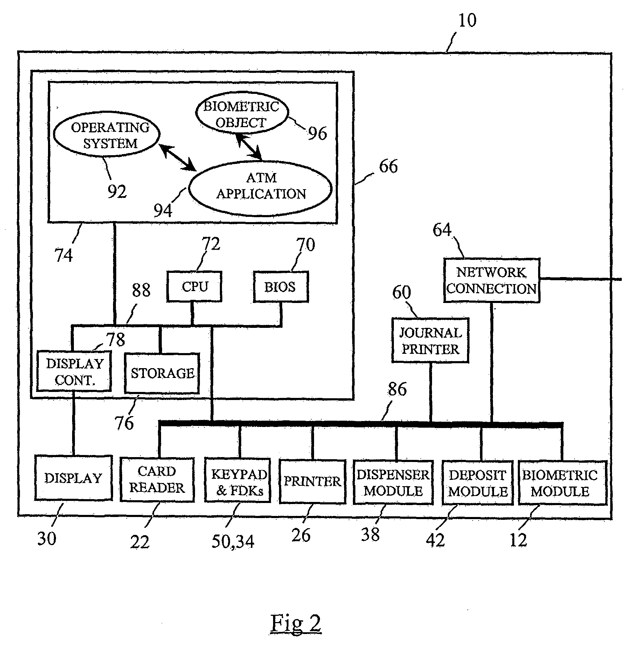

Reference is now made to Figs 1 and 2, which show a self-service terminal 10 in the form of an automated teller machine (ATM) including a card reader slot 20 in accordance with the invention. The ATM 10 has a chassis 14 to which is pivotably coupled a plastic fascia 16 covering an upper portion of the chassis 14. A door 18 is hingably coupled to a lower portion of the chassis 14. When the fascia 16 is hinged open and the door 18 is swung open, an operator can gain access to modules located within the ATM 10.

The fascia 16 provides a user interface to allow a user to interact with the ATM 10. In particular, the fascia 16 has apertures aligning with modules mounted in the chassis 14 when the fascia 16 is pivoted to the closed position. The fascia 16 defines the card reader slot 20 aligning with a card reader module 22 mounted within the chassis 14; a receipt printer slot 24 aligning with a receipt printer module 26 mounted within the chassis 14; a display aperture 28 aligning with a combined display 30 and associated function display keys (FDKs) 34 mounted as a module within the chassis 14; a dispenser slot 36 aligning with a dispenser module 38 mounted within the chassis 14; and a deposit aperture 40 aligning with a deposit module 42 mounted within the chassis 14.

The fascia 16 also includes an encrypting keypad 50 mounted on a shelf portion 52 extending outwardly from beneath the display aperture 28. The encrypting keypad 50 also receives input from the FDKs 34.

A biometric module 12 is mounted in the shelf portion 52 and includes (i.) a sensor 56 for receiving a human finger and for capturing fingerprint details, and (ii.) an interface 58 for encrypting and relaying a captured fingerprint image. The sensor 56 protrudes through an aperture in the shelf portion 52, and the interface 58 is mounted behind the shelf portion 52. The biometric sensor 56 is a Fingerloc (trade mark) AF-S2 fingerprint sensor, available from Authentec, Inc., P.O. Box 2719, Melbourne, FL 32902-2719, U.S.A.

As illustrated in Fig. 2, internally, the ATM 10 also includes a journal printer module 60 for creating a record of every transaction executed by the ATM 10, a network connection module 64 for accessing a remote authorisation system (not shown), and a controller module 66 (in the form of a PC core) for controlling the operation of the ATM 10, including the operation of the modules.

The controller 66 comprises a BIOS 70 stored in nonvolatile memory, a microprocessor 72, associated main memory 74, storage space 76 in the form of a magnetic disk drive, and a display controller 78 in the form of a graphics card.

The display module 30 is connected to the controller module 66 via the graphics card 78 installed in the controller module 66. The other ATM modules (12, 22, 26, 34, 38, 42, and 50) are connected to the ATM controller 66 via a device bus 86 and one or more internal controller buses 88.

In use, the main memory 74 is loaded with an ATM operating system kernel 92, an ATM application 94, and a biometric capture object 96. As is well known in the art, the operating system kernel 92 is responsible for memory, process, task, and disk management. The ATM application 94 is responsible for controlling the operation of the ATM 10. In particular, the ATM application 94 provides the sequence of screens used in each transaction (referred to as the transaction flow); monitors the condition of each module within the ATM (state of health monitoring); and obtains authorisation for transactions from a remote transaction authorisation server (not shown).

The term "screen" is used herein to denote the graphics, text, controls (such as menu options), and such like, that are presented on an SST display; the term "screen" as used herein does not refer to the hardware (that is, the display) that presents the graphics, text, controls, and such like. Typically, when a transaction is being entered at an SST, a series of screens are presented in succession on the SST display, the next screen displayed being dependent on a user entry or activity relating to the current screen. For example, a first screen may request a user to insert a card; once a card has been inserted a second screen may invite the user to enter his/her PIN; once the final digit of the PIN has been entered, a third screen may invite the user to select a transaction; and so on.

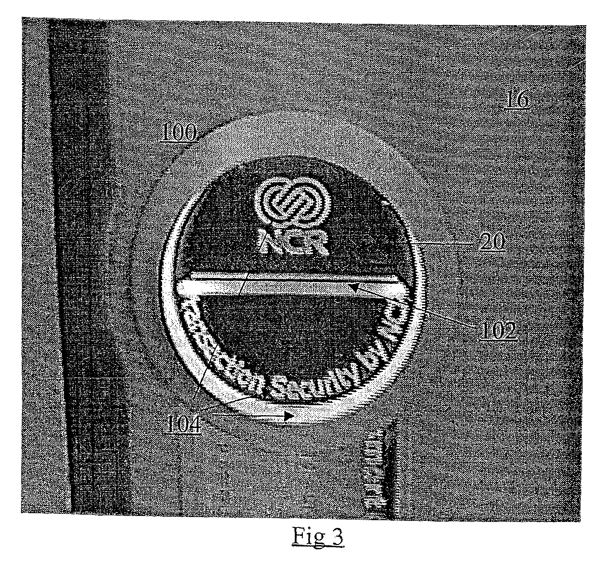

Fig 3 illustrates the housing of a card reader module 22 in accordance with the present invention in more detail.

The card reader module 22 has a housing 100 or mouth arranged for attachment to or incorporation in self-service terminal fascia 16. The housing 100 has a card entry slot 20 for receiving a card to be scanned. The housing is at least partially transparent, with a transparent portion 102. The housing also has an internal security marking 104, which is visible through the transparent portion 102 of the housing 100.

Significantly, if for whatever reason, for example the attachment of a skimming device to the front of the fascia 16, the mark was not visible then the user would have a visual indication that the device had been compromised.

The dimensions of security can be enhanced through the shape of the feature (stop fixing of foreign objects), colour (unique, difficult to match), illumination (any skimming device would also have to incorporate illumination) and the security mark itself.

Sensors (not shown) in the terminal arranged to detect the presence of added on features. If this occurs the processor 72 is arranged to alter the appearance of the security marking 104. In this case the visible appearance of the security marking 104 is altered to indicate to the user that the device may have been compromised. For example, the internal illumination of the housing may be changed from green to red.

Various modifications may be made to the above-described embodiments within the scope of the present invention, for example, different colours may be used.

## Claims

1. A card reader module housing (100) arranged for attachment to or incorporation in self-service terminal fascia (16), the housing (100) having a card entry slot (20) and a transparent portion (102), the housing (100) having an internal security marking (104) which is visible through the transparent portion (102) of the housing (100).

2. A housing (100) as claimed in claim 1, wherein the security marking (104) is a hologram.

3. A housing (100) as claimed in claim 1, wherein the security marking (104) is a text or legend.

4. A housing (100) as claimed in claim 1, wherein the security marking (104) is a diffuse illumination.

5. A housing (100) as claimed in claim 1, wherein the security marking (104) is a watermark.

6. A housing as claimed in any one of the preceding claims, wherein means arranged to present the security marking are coupled to a control processor (72) which is in turn coupled to sensors arranged to detect the attachment of a foreign body to the housing (100).

7. A housing as claimed in claim 6, wherein the control processor (72) is arranged to alter the visible characteristics of the security marking if the sensors detect a possible attachment of a foreign body to or adjacent the housing (100).

8. A housing as claimed in claim 7, wherein the colour of the internal illumination of the housing is altered on the detection of a foreign body.

9. A card reader module (22) comprising a housing (100) arranged for attachment to or incorporation in self-service terminal fascia (16), the housing (100) having a card entry slot (20) and a transparent portion (102), the module further comprising a security marking (104), enclosed by the housing (100), which is visible via the transparent portion (102) of the housing (100).

10. A module as claimed in claim 9, wherein means arranged to present the security marking are coupled to a control processor (72) which is in turn coupled to sensors arranged to detect the attachment of a foreign body to the housing (100).

11. A module as claimed in claim 10, wherein the control processor (72) is arranged to alter the visible characteristics of the security marking if the sensors detect a possible attachment of a foreign body to or adjacent the housing (100).

12. A module as claimed in claim 11, wherein the colour of the internal illumination of the housing is altered on the detection of a foreign body.

13. A self-service terminal fascia (16) incorporating a card reader module housing (100) having a card entry slot (20) and a transparent portion (102), the housing (100) having an internal security marking (104) which is visible through the transparent portion (102) of the housing (100).

14. A self-service terminal (10) incorporating a card reader module housing (100) arranged for attachment to or incorporation in the fascia (16) of the self service terminal, the housing (100) having a card entry slot (20), a transparent portion (102) and an internal security marking (104) which is visible through the transparent portion (102) of the housing (100).

15. A method of assisting a user in providing a card for reading by a card reader module (22),the method including displaying security marking (104) within a housing (100) of the card reader module (22), so as to reassure the user that the module has not been tampered with by an unauthorised third party.

16. A method as claimed in claim 15, wherein the module (22) is arranged to detect a possible attachment of a foreign body to or adjacent the housing (100) and to alter the visible characteristics of the security marking if such an attachment is detected

17. A method as claimed in claim 16, the colour of the internal illumination of the housing is altered on the detection of a foreign body.
